# EUROPÄISCHE PATENTSCHRIFT

(11) **EP 3 944 940 B1**
(45) Veröffentlichungstag und Bekanntmachung des Hinweises auf die Patenterteilung: **02.04.2025**
(21) Anmeldenummer: 21020154.7
(22) Anmeldetag: 17.03.2021
(51) Int. Cl.: B27G 19/02

(54) **SÄGEMASCHINE**
SAW
SCIE

(30) Priorität: 30.07.2020 DE 202020003280 U
(43) Veröffentlichungstag der Anmeldung: 02.02.2022
(73) Patentinhaber: Scheppach GmbH, 89335 Ichenhausen (DE)
(72) Erfinder: Gallagher, Philip, 89335 Ichenhausen (DE)
(74) Vertreter: Pa-Munk

(56) Entgegenhaltungen:
- EP-A1- 1 625 908
- EP-A1- 2 431 125
- EP-A1- 3 549 704
- WO-A1-2007/055096
- WO-A1-2015/102906
- US-A1- 2004 244 203
- US-A1- 2009 223 070
- US-A1- 2020 164 544

## Beschreibung

Die Erfindung betrifft eine Sägemaschine, gemäß dem Oberbegriff des Anspruchs 1. Eine solche Sägemaschine ist aus dem Dokument WO 2015 / 102906 A1 bekannt.

Bei den bekannten Anordnungen dieser Art trifft die aus dem Antriebsaggregat etwa rechtwinklig zur Sägeblattebene austretende Kühlluft auf das dem Eingang des Innenraums der Schutzhaube benachbarte Sägeblatt auf und wird dort gestaut, was zu Turbulenzen innerhalb des engen Spalts zwischen der antriebsaggregatseitigen Seitenwand des Unterteils der Schutzhaube und dem Sägeblatt führen kann. Die Folge davon ist, dass ein geordnetes Abströmen der Luft in Richtung des zum Spänesack führenden Ausgangs und damit eine entsprechende Mitnahme der im Betrieb vom Sägeblatt erzeugten und in Drehrichtung nach vorne abgeschleuderten Späne beziehungsweise Stäube gestört ist. Dieser Nachteil wird in der Regel dadurch noch verstärkt, dass die vom Sägeblatt abgeschleuderten Späne beziehungsweise Stäube richtungsmäßig sehr streuen, so dass ihre Flugbahn nicht direkt zum Ausgang führt, sondern in einen diesem vorgeordneten Zugangsbereich, der bei den bekannten Anordnungen vielfach eine mit Kanten und Stufen versehene Oberflächenkontur aufweist, was zu einer Ablenkung in unerwünschte Richtungen führen kann. Die bekannten Anordnungen sind daher bezüglich des Spänetransports zum Spänesack hin störanfällig und erweisen sich daher als nicht zuverlässig genug.

Eine ähnliche Anordnung ergibt sich aus den Figuren 1 und 2 der WO2015/102906A1. Diese Anordnung wird dort als Stand der Technik bezeichnet, von dem die dortige Erfindung offenbar ausgeht. Bei diesem Stand der Technik treten ähnliche Nachteile auf, wie oben im Zusammenhang mit dem gattungsgemäßen Stand der Technik angegeben ist. Zur Vermeidung dieser Nachteile wird in der WO2015/102906A1 eine Anordnung vorgeschlagen, bei der kein von einem Teil der Schutzhaube seitlich abstehender Motor vorgesehen ist und die Schutzhaube auch keinen seitlichen quer zum Sägeblatt gerichteten Eingang für die den Motor verlassende Kühlluft aufweist. Vielmehr besteht die Problemlösung hier darin, dass von Anfang an ausschließlich Luftströme mit zur Ebene des Sägeblatts paralleler Richtung erzeugt werden. Dabei ist es jedoch nicht möglich, den Aufbau der gattungsgemäßen Anordnung beizubehalten, sondern ist eine vollständige Umgestaltung erforderlich.

Die US2020/164544A1 zeigt eine Sägemaschine mit einem dem Sägeblatt zugeordneten Schutzgehäuse, an dessen Oberteil ein Vakuumaggregat angeschlossen ist, durch das Stäube und Späne nach oben abgesaugt werden. Hier liegt daher ein vom Aufbau der gattungsgemäßen Anordnung abweichender Aufbau vor.

Eine ähnliche Anordnung ergibt sich aus der US2004/244203A1.

Die WO2007/055096A1 zeigt eine Sägemaschine, bei der ähnlich wie beim gattungsgemäßen Stand der Technik vom Oberteil eines dem Sägeblatt zugeordneten Schutzgehäuses ein Motor seitlich absteht, der mit ihn durchströmender Luft gekühlt wird. Diese Luft tritt jedoch nicht in das Schutzgehäuse ein, sondern wird mittels eines eigenen Kanals außen am Schutzgehäuse vorbeigeführt, was einen vergleichsweise großen Platzbedarf und baulichen Aufwand erfordert.

Eine ähnliche Anordnung ergibt sich aus der US2009/223070A1, bei der die den Motor durchströmende Kühlluft ebenfalls nicht in das dem Sägeblatt zugeordnete Schutzgehäuse eintritt, sondern an diesem vorbei geleitet wird.

Auf derselben Linie liegt auch die der EP 3 549 704 A1 entnehmbare Sägemaschine, bei welcher die ein vom Oberteil einer dem Sägeblatt zugeordneten Schutzhaube seitlich abstehendes Antriebsaggregat durchströmende Kühlluft nicht oder nur zu einem kleinen Teil in das Schutzgehäuse eintritt und, wo dies der Fall ist, wie beim gattungsgemäßen Stand der Technik rechtwinklig auf das quer zur Strömungsrichtung der eintretenden Kühlluft angeordnete Sägeblatt auftrifft.

Die oben geschilderten, bekannten Anordnungen enthalten ersichtlich kein nützliches Vorbild zur Vermeidung der Nachteile des gattungsgemäßen Standes der Technik unter Beibehaltung seines bewährten Aufbaus.

Hiervon ausgehend ist es daher die Aufgabe der vorliegenden Erfindung, eine Sägemaschine eingangs erwähnter Art mit einfachen und kostengünstigen Mitteln so zu verbessern, dass ein geordneter Transport der bei einem Sägebetrieb entstehenden Späne und Stäube zum Spänesack hin begünstigt wird.

Diese Aufgabe wird erfindungsgemäß dadurch gelöst, dass am stationären Unterteil der Schutzhaube zumindest ein dem Eingang des Innenraums der Schutzhaube zugeordneter Leitkörper angebracht ist, welcher zum dem Spänesack zugeordneten Ausgang der Schutzhaube hin gerichtete Führungsmittel für die das Antriebsaggregat verlassende Kühlluft aufweist, wobei der Leitkörper zur Bildung seiner Führungsmittel einen inneren, um 90° umgelenkten Strömungskanal mit einem zum Kühlaggregat hin offenen Einlassquerschnitt und einem quer zum benachbarten Sägeblatt verlaufenden Ausströmquerschnitt aufweist.

Der erfindungsgemäße Leitkörper bewirkt in vorteilhafter Weise, dass die über den Eingang in die Schutzhaube einströmende Kühlluft nicht rechtwinklig auf das Sägeblatt auftrifft, sondern in eine zur Sägeblattebene parallele, zum Ausgang hinführende Richtung umgelenkt wird, so dass die beim Sägen entstehenden Späne und Stäube von der Luft schon im dem Ausgang zugeordneten Zugangsbereich zum Ausgang hin mitgenommen werden. Dabei wird durch den inneren Strömungskanal des Leitkörpers bewirkt, dass trotz beengter Verhältnisse im Spalt zwischen dem Sägeblatt und der diesem benachbarten Seitenwand des Unterteils der Schutzhaube eine zuverlässige Umlenkung der etwa rechtwinklig zur Sägeblattebene aus dem Antriebsaggregat austretenden Kühlluft in eine zur Sägeblattebene parallele, zum Ausgang hin führende Richtung erreicht wird. Hierdurch wird daher ein zuverlässiger Abtransport der Späne und Stäube in den Spänesack hinein begünstigt.

Vorteilhafte Ausgestaltungen und zweckmäßige Fortbildungen der übergeordneten Maßnahmen sind in den Unteransprüchen angegeben.

Vorteilhaft kann der dem Eingang zugeordnete Leitkörper einen seinen Einlassquerschnitt enthaltenden, in eine zugeordnete Öffnung der das Antriebsaggregat tragenden Seitenwand des Unterteils der Schutzhaube einsteckbaren Einlassstutzen und eine diesem gegenüberliegende, parallel zum benachbarten Sägeblatt verlaufende Prallwand aufweisen, die mit einem Randbereich den Ausströmquerschnitt flankiert. Der Einlassstutzen ermöglicht eine einfache Anbringung des betreffenden Leitkörpers an der zugeordneten Seitenwand des Unterteils mittels einer Steckverbindung. Die dem Einlassquerschnitt gegenüberliegende Prallwand bewirkt die erwünschte Richtungsänderung und begrenzt eine leitkörperseitige Ausströmdüse mit zur Sägeblattebene paralleler Strömungsrichtung.

Der genannte Vorteil der übergeordneten Maßnahmen kann dadurch wirksam unterstützt werden, dass auch dem Ausgang des Innenraums der Schutzhaube ein weiterer Leitkörper zugeordnet ist, der zum Ausgang hin gerichtete Führungsmittel für vom Sägeblatt abgeschleuderte Späne beziehungsweise Stäube aufweist. Hierdurch wird eine zuverlässige Kanalisierung der vom Sägeblatt abge1schleuderten Späne beziehungsweise Stäube erreicht, wodurch deren Mitnahme durch die zum Ausgang abströmende Kühlluft erleichtert wird.

Gemäß einer weiteren vorteilhaften Ausgestaltung kann der dem Ausgang zugeordnete Leitkörper im dem Sägeblatt benachbarten Zugangsbereich zum Ausgang in das Unterteil der Schutzhaube eingebaut und nach Art einer vorne und hinten und umfangsseitig zum Sägeblatt hin offenen Rinne ausgebildet sein. Die zum Ausgang hinführende Rinne kann die vom Sägeblatt abgeschleuderten Späne beziehungsweise Stäube schon in der Nähe des Sägeblatts, bevor noch eine größere Streuung in unterschiedliche Richtungen erfolgen kann, aufnehmen und zuverlässig zum Ausgang hin kanalisieren, was die in dieser Richtung mitnehmende Wirkung der ebenfalls zum Ausgang hin strömenden Luft unterstützt.

Zweckmäßig kann die genannte Rinne eine konkave, kegelmantelsegmentförmige Leitfläche aufweisen, was eine einfache Geometrie ergibt.

Eine weitere zweckmäßige Maßnahme kann darin bestehen, dass die den dem Ausgang zugeordneten Leitkörper bildende Rinne eine zur das Antriebsaggregat tragenden Seitenwand des Unterteils der Schutzhaube parallele Seitenwand aufweist, was eine einfache Anbringung des genannten Leitkörpers an der zugeordneten Seitenwand des Unterteils der Schutzhaube ermöglicht.

Eine weitere vorteilhafte Maßnahme kann darin bestehen, dass der dem Ausgang zugeordnete Leitkörper eine an die Oberflächenkontur des dem Ausgang vorgeordneten Zugangsbereichs angepasste Rückseite aufweist. Dies ermöglicht einen zuverlässigen Sitz und eine platzsparende Anordnung.

Eine weitere besonders zu bevorzugende Maßnahme kann darin bestehen, dass jeder Leitkörper lösbar am Unterteil der Schutzhaube anbringbar ist. Dies ermöglicht in vorteilhafter Weise einen einfachen Austausch der Leitkörper und insbesondere auch eine einfache Nachrüstung bereits bestehender Maschinen mit den erfindungsgemäßen Leitkörpern.

Zweckmäßig können die zum Einsatz kommenden Leitkörper als aus Kunststoff bestehende Spritzgussformlinge ausgebildet sein. Dies begünstigt die Herstellung glatter Leitflächen und gewährleistet dennoch eine einfache und kostengünstige Herstellung.

Weitere vorteilhafte Ausgestaltungen und zweckmäßige Fortbildungen der Erfindung ergeben sich aus der nachstehenden Beschreibung eines bevorzugten Ausführungsbeispiels anhand der Zeichnung in Verbindung mit den Ansprüchen.

In der nachstehend beschriebenen Zeichnung zeigen:
- Figur 1: eine Seitenansicht einer erfindungsgemäßen Kapp-Zugsäge, teilweise im Schnitt
- Figur 2: eine schematische Darstellung der Funktionsweise des dem Eingang der Schutzhaube zugeordneten Leitkörpers,
- Figur 3: eine schematische Darstellung der Funktionsweise des dem Ausgang der Schutzhaube zugeordneten Leitkörpers,
- Figur 4: eine perspektivische Ansicht des dem Eingang der Schutzhaube zugeordneten Leitkörpers mit Blickrichtung auf den Ausströmquerschnitt hin,
- Figur 5: die Anordnung gemäß Figur 4 mit Blickrichtung zum Einströmquerschnitt hin und
- Figur 6: eine perspektivische Ansicht des dem Ausgang zugeordneten Leitkörpers mit Blickrichtung in die Rinne hinein.

Anwendungsgebiet der Erfindung sind Sägemaschinen mit einem rotierend antreibbaren Kreissägeblatt und dieser zugeordneter Schutzhaube sowie hieran angeschlossenem Spänesack. Dabei kann es sich um bewegliche oder stationäre Maschinen handeln.

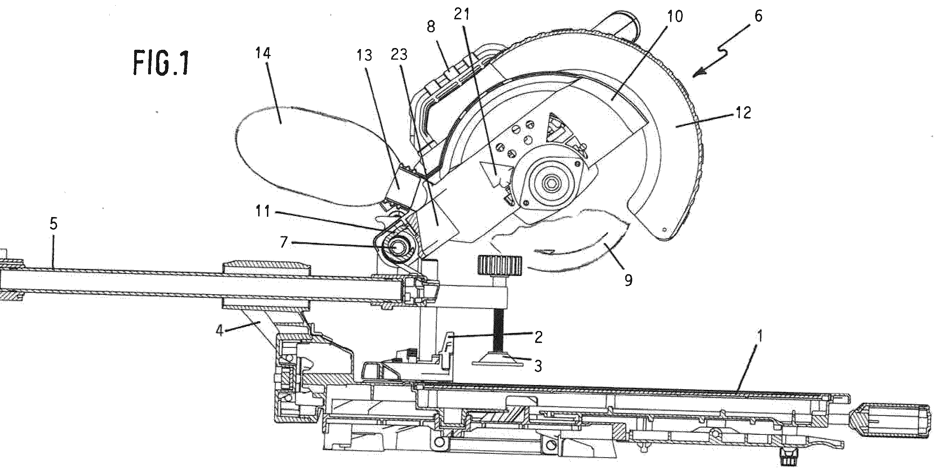

Die Figur 1 zeigt eine erfindungsgemäße Kapp-Zugsäge mit einem auf einem nicht dargestellten Untergestell aufnehmbaren Maschinentisch mit einer drehbaren Tischplatte 1, der ein Werkstückanschlag 2 sowie eine Spanvorrichtung 3 zugeordnet sind. Im Bereich der Peripherie der drehbaren Tischplatte 1 ist ein Lagerbock 4 für ein tischparallel in seiner Längsrichtung bewegbares Tragorgan 5 vorgesehen, auf dem ein Kreissägeaggregat 6 um eine horizontale Achse 7 schwenkbar aufgenommen ist, das mittels eines hieran angebrachten Griffs 8 manuell bewegbar ist. Durch Niederschwenken des Kreissägeaggregats 6 um die Achse 7 können am Werkstückanschlag 2 anliegende Werkstücke quer zur ihrer Längsrichtung abgeschnitten, das heißt gekappt werden, wobei das Kreissägeaggregat 6 aufgrund der Bewegbarkeit seines Tragorgans 5 zusätzlich durch Ausübung einer Zugkraft auch in Schnittrichtung bewegbar ist, so dass auch vergleichsweise breite Schnitte ausgeführt werden können.

Das Kreissägeaggregat 6 enthält ein mittels eines in Figur 1 verdeckten Antriebsaggregats rotierend antreibbares Kreissägeblatt 9, dem eine seinen oberen Umfangsbereich übergreifende Schutzhaube zugeordnet ist. Diese enthält ein gegenüber dem nicht dargestellten Antriebsaggregat stationäres Unterteil 10, das hier mit einem das Schwenklager 7 enthaltenden Träger 11 verbunden ist, und ein gegenüber dem Unterteil 10 konzentrisch zur Achse des Kreissägeblatts 9 schwenkbar angeordnetes Oberteil 12, das bei der Durchführung eines Sägeschnitts am Werkstück anläuft und entgegen der Kraft einer Rückstellfeder zurückgedrängt wird. Der vom Unterteil 10 und Oberteil 12 begrenzte Innenraum der Schutzhaube besitzt einen dem Sägeblatt 9 seitlich benachbarten Ausgang 13, der zu einem hieran angeschlossenen Spänesack 14 führt, der als Auffangbehälter für die beim Sägen erzeugten Späne und Stäube sowie als Luftfilter dient. In den Innenraum der Schutzhaube gelangt nämlich auch die Abluft einer dem Antriebsaggregat zugeordneten Kühleinrichtung, die ebenfalls in den Spänesack 14 eintritt und über dessen aus textilem Material bestehende Begrenzung in die Umgebung entweicht.

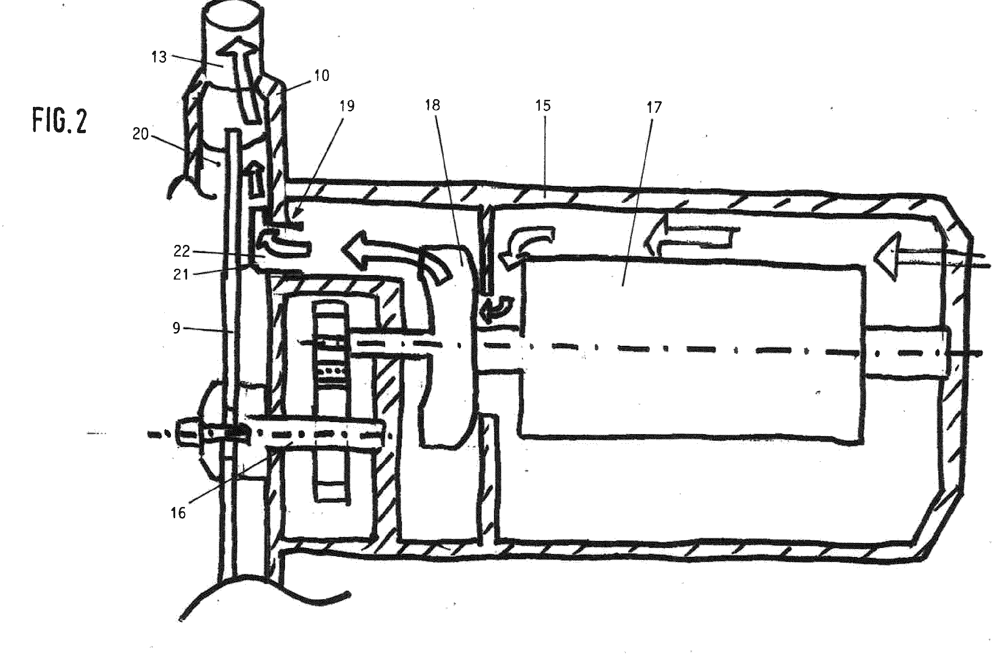

Die Figur 2 zeigt das oben bereits erwähnte Antriebsaggregat 15, das hier von einer Seitenwand des Unterteils 10 der Schutzhaube seitlich absteht und mit einer das Kreissägeblatt 9 aufnehmenden Abtriebswelle 16 versehen ist. Das Antriebsaggregat 15 enthält einen Antriebsmotor in Form eines Elektromotors 17, der mit vorbeistreichender Luft gekühlt wird, wie durch Strömungspfeile angedeutet ist. Hierzu ist ein Kühlaggregat vorgesehen, das ein mittels des Elektromotors 17 antreibbares Ventilatorrad 18 aufweist, das in einem dem Elektromotor 17 benachbarten Durchströmraum angeordnet ist und die den Elektromotor 17 kühlende Luftströmung erzeugt. Diese Kühlluft gelangt als Abluft über einen in der das Antriebsaggregat 15 tragenden Seitenwand des Unterteils 10 vorgesehenen Eingang 19 in den Innenraum 20 der Schutzhaube.

Um dabei zu verhindern, dass die den Eingang 19 mit zur Achse des Sägeblatts 9 paralleler Richtung und damit rechtwinklig zur Sägeblattebene durchströmende Luft auf das Sägeblatt 9 auftrifft und hier gestaut wird, ist dem Eingang 19 ein aus Figur 2 erkennbarer und auch in Figur 1 angedeuteter Leitkörper 21 zugeordnet, der innere Führungsmittel in Form eines Umlenkkanals 22 aufweist, der die Luftströmung, wie durch Pfeile angedeutet ist, um 90° in eine zur Sägeblattebene parallele Richtung und zum Ausgang 13 der Schutzhaube hin umlenkt. Die parallel zur Sägeblattebene dem Ausgang 13 zugeführte Luft bewirkt eine Mitnahme und damit einen guten Transport der vom Sägeblatt 9 bei der Durchführung von Sägearbeiten in Richtung des zweckmäßig symmetrisch zur Sägeblattebene angeordneten Ausgangs 13.

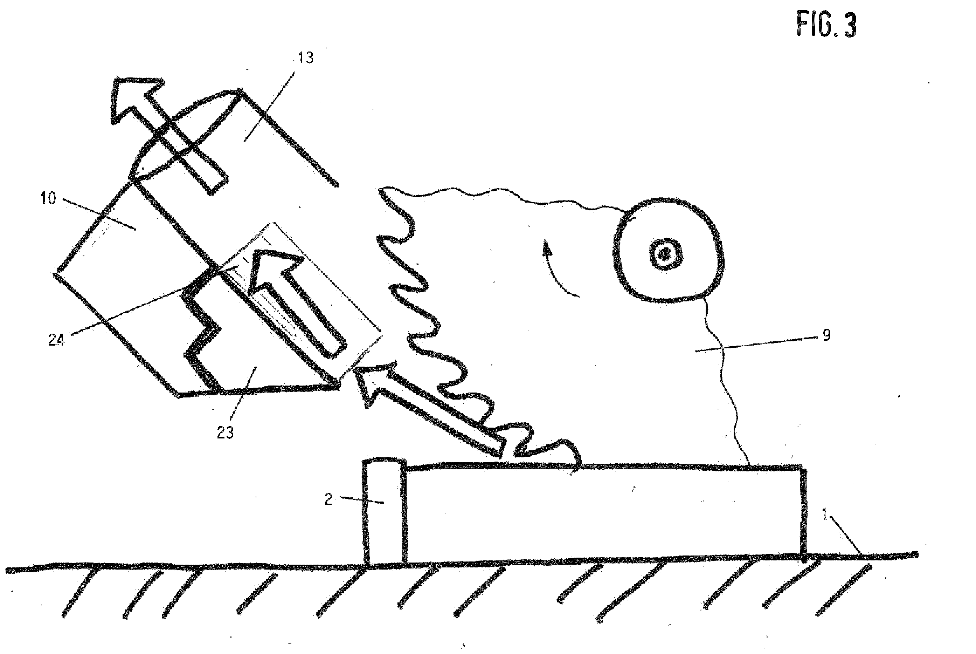

Um die Späne und Stäube zusammen mit der zugeführten Luft zum Ausgang 13 hin zu kanalisieren, ist dem Ausgang 13 ein weiterer, aus Figur 3 erkennbarer und auch in Figur 1 angedeuteter Leitkörper 23 zugeordnet, dessen zum Ausgang 13 hinführende Führungsmittel gemäß Figur 3 als vorne und hinten und umfangsseitig zum Sägeblatt 9 hin offene Rinne 24 ausgebildet sind. Der ausgangsseitige Leitkörper 23 ist, wie Figur 3 weiter erkennen lässt, im dem Ausgang 13 vorgeordneten Zugangsbereich zum Ausgang 13 in das Unterteil 10 der Schutzhaube eingebaut.

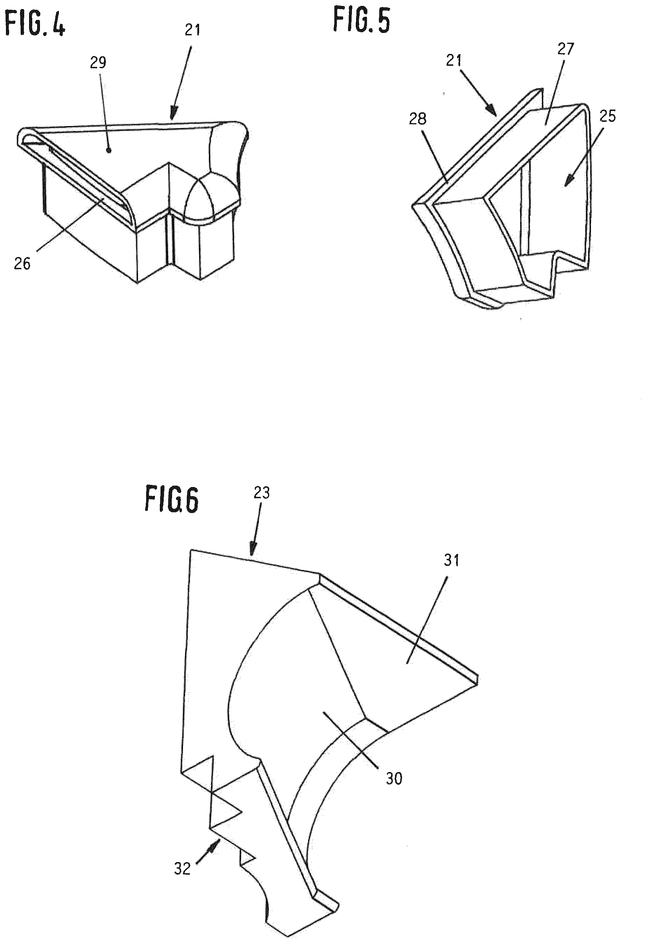

Der eingangsseitige Leitkörper 21 ist, wie die Figuren 4 und 5 anschaulich zeigen, als Hohlkörper ausgebildet, der einen zum benachbarten Kühlaggregat hin offenen, zur Sägeblattebene verlaufenden Einströmquerschnitt 25 und einen demgegenüber um 90° versetzten, quer zur Sägeblattebene verlaufenden Austrittsquerschnitt 26 aufweist, der dem Ausgang 13 des Innenraums der Schutzhaube zugewandt ist. Der Einströmquerschnitt 25 und der Ausströmquerschnitt 26 sind durch den in Figur 2 angedeuteten, inneren Umlenkkanal 22 miteinander verbunden. Der Leitkörper 21 besitzt einen seinen Einströmquerschnitt 25 enthaltenden Einlassstutzen 27, mit dem er in eine den Eingang 19 bildende Öffnung der das Antriebsaggregat 15 tragenden Seitenwand des Unterteils 10 einsteckbar ist. Der Einlassstutzen 27 ist dabei am in Einsteckrichtung hinteren Ende von einem eine randseitige Begrenzung des Umlenkkanals 22 bildenden Flansch 28 umgeben und kann dementsprechend bis auf Anschlag in die zugeordnete Öffnung der das Antriebsaggregat 15 tragenden Seitenwand des Unterteils 10 eingesteckt und hieran festgelegt werden. Die vom Eingangsstutzen 27 abgewandte, dem benachbarten Kreissägeblatt 9 zugewandte Begrenzung des Umlenkkanals 22 wird durch eine über einen gebogenen Randbereich an den Flansch 28 anschließende, zur Sägeblattebene parallele Prallwand 29 gebildet, an deren innerer Oberfläche eine Umlenkung der in den Leitkörper 21 einströmenden Luft um 90° erfolgt. Die Prallwand 29 begrenzt mit einem dem Ausgang 13 zugewandten Randbereich zusammen mit einem parallelen Bereich des Flanschs 28 den Ausströmquerschnitt 26, der praktisch eine in Richtung zum Ausgang 13 hin weisende Ausströmdüse bildet.

Der ausgangsseitige Leitkörper 23, der im dem Ausgang 13 vorgeordneten Zugangsbereich zum Ausgang 13 in das Unterteil 10 der Schutzhaube eingebaut ist, enthält die oben schon erwähnte Rinne 24, die hinten und vorne und umfangsseitig offen ist. Die Rinne 24 ist gemäß Figur 6 zweckmäßig von ihrem dem Sägeblatt 9 zugewandten Anfang zum Ausgang 13 hin konvergierend ausgebildet, was eine konkave, kegelmantelsegmentförmige Leitfläche 30 ergibt.

Der Leitkörper 23 besitzt gemäß Figur 6 weiter eine an seine kegelmantelsegmentförmige Leitfläche 30 anschließende, zur benachbarten Seitenwand des Unterteils 10 parallele Seitenwand 31 und kann mit dieser am Unterteil anliegen und hieran befestigt werden. Die von der Rinne 24 abgewandte Rückseite des Leitkörpers 23 ist, wie Figur 6 weiter erkennen lässt, mit einer an die Oberflächenkontur des dem Ausgang 13 vorgeordneten Zugangsbereichs des Innenraums der Schutzhaube angepassten Kontur 32 versehen, so dass unterteilseitig vorhandene Stufen und Kanten ausgeglichen werden und ein zuverlässiger Sitz und eine kompakte Bauweise erreicht wird.

Jeder der beiden Leitkörper 21 beziehungsweise 23 kann zweckmäßig als aus Kunststoff bestehender Spritzgussformling hergestellt werden. Zweckmäßig ist jeder der beiden Leitkörper 21 beziehungsweise 23 lösbar am Unterteil 10 der Schutzhaube anbringbar, so dass die Leikörper 21, 23 einfach austauschbar und auch zur Nachrüstung bereits bestehender Maschinen mit den erfindungsgemäßen Leitkörpern geeignet sind.

## Patentansprüche

1. Sägemaschine, insbesondere Kappsäge oder Kappzugsäge, mit einem Kreissägeblatt (9), das auf einer Abtriebswelle (16) eines einen Elektromotor (17) und ein diesem zugeordnetes Kühlaggregat enthaltenden Antriebsaggregats (15) aufnehmbar ist und dem eine seinen oberen Umfangsbereich umfassende Schutzhaube zugeordnet ist, die ein stationäres Unterteil (10), von dem das Antriebsaggregat (15) seitlich absteht, und ein hierauf um die Achse des Sägeblatts (9) schwenkbar aufgenommenes Oberteil (12) aufweist, und dessen Innenraum über einen dem Unterteil (10) zugeordneten Ausgang (13) mit einem hieran angeschlossenen Spänesack (16) und über einen der das Antriebsaggregat (15) tragenden Seitenwand des Unterteils (10) zugeordneten, dem Sägeblatt (9) benachbarten Eingang (19) mit einem Strömungsraum für das Antriebsaggregat verlassende Kühlluft kommuniziert, **dadurch gekennzeichnet, dass** am stationären Unterteil (10) der Schutzhaube zumindest ein dem Eingang (19) des Innenraums der Schutzhaube zugeordneter Leitkörper (21) angebracht ist, welcher zum dem Spänesack (14) zugeordneten Ausgang (13) der Schutzhaube hin gerichtete Führungsmittel für die das Antriebsaggregat (15) verlassende Kühlluft aufweist, wobei der Leitkörper (21) als Führungsmittel einen inneren, um 90° umgelenkten Strömungskanal (22) mit einem zum Antriebsaggregat (15) hin offenen Einlassquerschnitt (25) und einem quer zum benachbarten Sägeblatt (9) verlaufenden, dem Ausgang (13) zugewandten Ausströmquerschnitt (26) aufweist.

2. Sägemaschine nach Anspruch 1, **dadurch gekennzeichnet, dass** der dem Eingang (19) zugeordnete Leitkörper (21) einen seinen Einlassquerschnitt (25) enthaltenden, in eine zugeordnete Öffnung der das Antriebsaggregat (15) tragenden Seitenwand des Unterteils (10) der Schutzhaube einsteckbaren Einlassstutzen (27) und eine diesem gegenüberliegende, parallel zum benachbarten Sägeblatt (9) verlaufende Prallwand (29) aufweist, die mit einem Randbereich den Ausströmquerschnitt (26) flankiert.

3. Sägemaschine nach einem der vorhergehenden Ansprüche, **dadurch gekennzeichnet, dass** dem Ausgang (13) des Innenraums der Schutzhaube ein weiterer Leitkörper (23) zugeordnet ist, der zum Ausgang (13) hin gerichtete Führungsmittel für vom Sägeblatt (9) abgeschleuderte Späne und Stäube aufweist.

4. Sägemaschine nach Anspruch 3, **dadurch gekennzeichnet, dass** der dem Ausgang (13) zugeordnete Leitkörper (23) im dem Sägeblatt (9) benachbarten Zugangsbereich zum Ausgang (13) in das Unterteil (10) der Schutzhaube eingebaut und nach Art einer vorne und hinten und umfangsseitig zum Sägeblatt (9) hin offenen Rinne (24) ausgebildet ist.

5. Sägemaschine nach Anspruch 4, **dadurch gekennzeichnet, dass** die den dem Ausgang (13) zugeordneten Leitkörper (23) bildende Rinne (24) eine konkave, kegelmantelsegmentförmige Leitfläche (30) aufweist.

6. Sägemaschine nach Anspruch 5, **dadurch gekennzeichnet, dass** die den dem Ausgang (13) zugeordneten Leitkörper (23) bildende Rinne (24) eine zur das Antriebsaggregat (15) tragenden Seitenwand des Unterteils (10) der Schutzhaube parallele Seitenwand (31) aufweist.

7. Sägemaschine nach einem der vorhergehenden Ansprüche 2-6, **dadurch gekennzeichnet, dass** der dem Ausgang (13) zugeordnete Leitkörper (23) rückseitig eine an die Oberflächenkontur des dem Ausgang (13) vorgeordneten Zugangsbereichs angepasste Kontur (32) aufweist.

8. Sägemaschine nach einem der vorhergehenden Ansprüche, **dadurch gekennzeichnet, dass** jeder Leitkörper (21, 23) als Kunststoff-Spritzgussformling ausgebildet ist.

9. Sägemaschine nach einem der vorhergehenden Ansprüche, **dadurch gekennzeichnet, dass** jeder Leitkörper (21, 23) lösbar am Unterteil (10) der Schutzhaube anbringbar ist.

## Claims

1. Saw, in particular a crosscut saw or a crosscut pull saw, having a circular saw blade (9) which can be accommodated on an output shaft (16) of a drive assembly (15) containing an electric motor (17) and a cooling unit associated therewith, and with which a protective hood is associated, encompassing its upper circumferential region, which has a stationary lower part (10), from which the drive assembly (15) projects laterally, and an upper part (12) which is held on the latter such that it can pivot around the axis of the saw blade (9), and the interior of which communicates, via an outlet (13) associated with the lower part (10), with a chip bag (16) connected thereto and communicates via an inlet (19) associated with the side wall of the lower part (10) carrying the drive unit (15) and adjacent to the saw blade (9) with a flow space for the cooling air leaving the drive unit, **characterized in that** at least one guide body (21) associated with the inlet (19) of the interior of the protective hood is attached to the stationary lower part (10) of the protective hood, which body has guide means directed towards the outlet (13) of the protective hood associated with the chip bag (14) for the cooling air leaving the drive assembly (15), wherein the guide body (21) has as the guide means an inner flow channel (22) deflected through 90° and having an inlet cross-section (25) open towards the drive unit (15) and an outflow cross-section (26) extending transversely to the adjacent saw blade (9) and facing the outlet (13).

2. Saw according to claim 1, **characterized in that** the guide body (21) associated with the inlet (19) has an inlet connection piece (27) containing its inlet cross-section (25) and insertable into an associated opening of the side wall, bearing the drive unit (15), of the lower part (10) of the protective hood, and a baffle wall (29) lying opposite the connection piece and running parallel to the adjacent saw blade (9), which baffle wall flanks the outflow cross-section (26) with an edge region.

3. Saw according to one of the preceding claims, **characterized in that** a further guide body (23) is associated with the outlet (13) of the interior of the protective hood, which body has guide means directed towards the outlet (13) for chips and dusts flung off by the saw blade (9).

4. Saw according to claim 3, **characterized in that** the guide body (23) associated with the outlet (13) is installed in the lower part (10) of the protective hood in the access region, adjacent to the saw blade (9), to the outlet (13) and is designed in the manner of a channel (24) open at the front and rear and on the peripheral side towards the saw blade (9).

5. Saw according to claim 4, **characterized in that** the channel (24) forming the guide body (23) associated with the outlet (13) has a concave guide surface (30) in the shape of a segment of an envelope of cone.

6. Saw according to claim 5, **characterized in that** the channel (24) forming the guide body (23) associated with the outlet (13) has a side wall (31) parallel to the side wall of the lower part (10) of the protective hood that carries the drive unit (15).

7. Saw according to one of the preceding claims 2 to 6, **characterized in that** the guide body (23) associated with the outlet (13) has on the rear side a contour (32) adapted to the surface contour of the access region arranged upstream of the outlet (13).

8. Saw according to one of the preceding claims, **characterized in that** each guide body (21, 23) is designed as a plastic injection molding.

9. Saw according to one of the preceding claims, **characterized in that** each guide body (21, 23) can be detachably attached to the lower part (10) of the protective hood.

## Revendications

1. Scie, en particulier scie à onglet ou scie à onglet radiale, avec une lame de scie circulaire (9) qui peut être placée sur un arbre de sortie (16) d'un groupe moteur (15) comprenant un moteur électrique (17) et un groupe de refroidissement associé à celui-ci et à laquelle est associé un capot de protection entourant sa zone de circonférence supérieure, qui comporte une partie inférieure (10) fixe écartée du groupe moteur (15) sur le côté et une partie supérieure (12) reçue par-dessus avec possibilité de pivotement autour de l'axe de la lame de scie (9) et dont l'intérieur communique par une sortie (13) associée à la partie inférieure (10) avec un sac à copeaux (16) qui lui est raccordé et par une entrée (19) associée à une cloison latérale de la partie inférieure (10) portant le groupe moteur (15) et voisine de la lame de scie (9) avec un espace de circulation pour l'air de refroidissement sortant du groupe moteur, **caractérisée en ce qu'**est disposée sur la partie inférieure (10) fixe du capot de protection au moins une chicane (21) associée à l'entrée (19) de l'intérieur du capot de protection, qui comporte des moyens de guidage pour l'air sortant du groupe moteur (15) orientés vers la sortie (13) du capot de protection associée au sac à copeaux (14), laquelle chicane (21) comporte comme moyen de guidage un conduit de circulation intérieur (22) dévié à 90° avec une section d'entrée (25) ouverte vers le groupe moteur (15) et une section de sortie (26) qui s'étend transversalement par rapport à la lame de scie (9) et qui est tournée vers la sortie (13).

2. Scie selon la revendication 1, **caractérisée en ce que** la chicane (21) associée à l'entrée (19) comprend un raccord d'entrée (27) contenant sa section d'entrée (25) et pouvant être emboîté dans une ouverture associée de la paroi latérale de la partie inférieure (10) du capot de protection portant le groupe moteur (15) et une paroi de rebond (29) faisant face à celui-ci qui s'étend parallèlement à la lame de scie (9) voisine, dont une zone de bord borde la section de sortie (26).

3. Scie selon l'une des revendications précédentes, **caractérisée en ce que** la sortie (13) de l'intérieur du capot de protection est associée à une autre chicane (23) qui comporte des moyens de guidage orientés vers la sortie (13) pour les copeaux et les poussières éjectés par la lame de scie (9).

4. Scie selon la revendication 3, **caractérisée en ce que** la chicane (23) associée à la sortie (13) est installée dans la zone d'accès voisine de la lame de scie (9) vers la sortie (13) dans la partie inférieure (10) du capot de protection et conformée comme une gouttière (24) ouverte devant et derrière et sur la circonférence vers la lame de scie (9).

5. Scie selon la revendication 4, **caractérisée en ce que** la gouttière (24) formant la chicane (23) associée à la sortie (13) présente une surface de guidage (30) concave en forme de segment d'enveloppe conique.

6. Scie selon la revendication 5, **caractérisée en ce que** la gouttière (24) formant la chicane (23) associée à la sortie (13) présente une paroi latérale (31) parallèle à la paroi latérale portant le groupe moteur (15) de la partie inférieure (10) du capot de protection.

7. Scie selon l'une des revendications 2 à 6, **caractérisée en ce que** la chicane (23) associée à la sortie (13) présente sur l'arrière un contour (32) adapté au contour de surface de la zone d'accès située en amont de la sortie (13).

8. Scie selon l'une des revendications précédentes, **caractérisée en ce que** chaque chicane (21, 23) est conformée comme une pièce en plastique moulée par injection.

9. Scie selon l'une des revendications précédentes, **caractérisée en ce que** chaque chicane (21, 23) peut être montée de façon amovible sur la partie inférieure (10) du capot de protection.
